# EUROPEAN PATENT SPECIFICATION

(11) **EP 1 315 386 B1**
(45) Date of publication and mention of the grant of the patent: **03.07.2013**
(21) Application number: 02292740.4
(22) Date of filing: 04.11.2002
(51) Int. Cl.: H04N 9/82

(54) **Digital video recorder and methods for digital recording**
Digitales Videoaufnahmegerät und Verfahren zur digitalen Aufnahme
Dispositif d'enregistrement vidéo numérique et procédés d'enregistrement numérique

(30) Priority: 14.11.2001 EP 01127015
(43) Date of publication of application: 28.05.2003
(73) Proprietor: Thomson Licensing, 92130 Issy-les-Moulineaux (FR)
(72) Inventor: Kubsch, Stefan, 31559 Hohnhorst (DE); Winter, Marco, 30173 Hannover (DE); Adolph, Dirk, 30952 Ronnenberg (DE)
(74) Representative: Rittner, Karsten

(56) References cited:
- EP-A- 1 111 916
- EP-A2- 0 873 022
- WO-A-01/76241
- WO-A1-01/15168
- US-A- 5 974 544

## Description

### Field of the invention

The present invention relates to the field of digital audio and/or video recording, and more particularly to recording of metadata by means of a digital video recorder (DVR).

### Background of the invention

It is as such known from the prior art to include metadata in a transport stream. The term "metadata" is used for all kinds of data about data. This encompasses data which is descriptive about content, such as program title and synopsis. Further the term metadata does also encompass data which relates to the data transmission and/or recording process itself.

For example, the TV-Anytime forum has published metadata specifications which define the attractors and data structures that allow consumers to find, navigate and manage content. The "TV-Anytime" standard is an emerging standard which is defined by the TV-Anytime forum.

Such metadata is also referred to as "attractors" because it can attract a consumer to content. Attractors allow consumers to find, navigate and manage content from various sources. In addition to attractors metadata as defined by TV-Anytime also includes information about user preferences and history. User preference information, such as favorite actors or TV-shows, is included within the scope of TV-Anytime metadata to allow software agents to select content on the consumers behalf.

The metadata representation format is a specification of how TV-Anytime metadata is represented in the extended mark up language (XML). However the TV-Anytime metadata is not restricted to XML but can also be encoded in a binary format for transmission or storage. Details of the metadata specification are published in the document SP003V10 of 16 February, 2001 which is available on the web-site www.tv-anytime.org. So far no transport mechanism is disclosed for the metadata within the scope of the TV-Anytime specification; also the manner in which the metadata is stored, accessed and used on a personal digital recorder (PDR) is unknown.

Further it is as such known from the prior art to include metadata in a MPEG-2 transport stream. Such transport streams are used for digital video broadcasting. In this instance the metadata is included in the transport stream in the form of digital video broadcast-service information (DVB-SI). The DVB-SI format is described in EN 300 468, DVB Specification for Service Information (SI) in DVB systems.

For the recording of a DVB program by means of a digital video recorder (DVR) a so-called DVR-standard is currently under development. However, a problem associated with the recording of a DVB signal by means of a DVR is that not all program related information (DVB-SI) is stored on the storage medium, e.g. an optical disc. The loss of this descriptive data has serious disadvantages for the DVR operation. Furthermore, the user cannot include user provided data such as annotations or other user provided content into the recording. Finally, the DVR format does not provide for a means to store such information outside the stream for making metadata available for navigation purposes.

EP-A-1111916 discloses MPEG video stream recording/reproducing, including recording of PSI (Program Specific Information) data included in an MPEG-TS. Means for detecting PSI accesses an incoming transport stream, detects PSI packets and records the PSI data, which are not modified or decoded. Detecting and analyzing PSI data is done during reproduction. For reproduction, the PSI data are read from the means for detecting PSI and added to the head of the transport stream.

WO-A-01/15168 discloses a user interface and processing system for digital video, audio and ancillary data, which supports decoding, recording and other applications including the conversion of data formats between read-only and recordable formats. The system creates a menu, generates specified navigation parameters for advanced multimedia navigation that are compatible with the recordable data format, and incorporates file structure data and the generated navigation parameters in output data of menu items of the menu. The system is however not suitable for making metadata easier accessible that are included in a transport stream, such as metadata that comprise program related information.

### Summary of the invention

The present invention provides for an improved method for recording of program data comprised in a transport stream, such as MPEG-2, by means of a digital audio and/or video recorder (DVR). Further the invention provides for an improved computer program and digital audio and/or video recorder for recording of program data comprised in such a transport stream.

The invention enables to include metadata provided by the transport stream into the navigation data of the digital recording. This allows a user to take full advantage of the metadata provided by the broadcasters and to include additional metadata, such as user provider annotations and / or data from other sources like the Internet, digital audio broadcast data (DAB) or teletext.

It is a further advantage of the present invention that the metadata information which is stored as part of the navigation data of the digital recording enables a user to use that information for retrieval of recordings and to readily access metadata information.

In accordance with an aspect of the invention metadata is also stored as part of the DVR MPEG-2 transport stream file (MPEG TS). This is done by ingesting of additional data packets into the MPEG TS transport stream.

The additional data packets carry the metadata information. In case the metadata which is stored as part of the navigation data is erased by a user operation or otherwise this metadata can be reconstructed from the additional data packets which are stored as part of the transport stream MPEG TS.

In accordance with a further preferred embodiment of the invention additional data packets are ingested in the MPEG TS transport stream in isochronous intervals. These metadata packets contain hash tables which are calculated during the recovering.

A hash table is a checksum or a CRC (Cyclic Redundancy Check) and provides consistency checks after recording. The check is done by recalculating the hash table metadata during playback and comparing it to the hash tables comprised in the additional data packets of the transport stream.

In accordance with a further preferred embodiment of the invention additional metadata packets are provided for trick modes. Metadata packets embedded within the MPEG TS transport stream are carrying pointers to adjacent entry points for I-frames. For example the trick mode metadata packets encompass a list of past and / or future I-frames. This simplifies handling of the trick mode.

### Brief description of the drawings:

In the following preferred embodiment of the invention will be explained in greater detail by making reference to the drawings in which:
- Figure 1: is a block diagram of an embodiment of a digital video recorder in accordance with the invention,
- Figure 2: is a second embodiment of a digital video recorder which enables to add metadata to previous recordings,
- Figure 3: is a table of possible locations of descriptors,
- Figure 4: is illustrative of the vendor specific data syntax,
- Figure 5: is illustrative of a metadata packet syntax,
- Figure 6: is illustrative of a transport packet syntax,
- Figure 7: is illustrative of a packet identifier descriptor syntax,
- Figure 8: is illustrative of the format of isochronous metadata packets in a DVR MPEG TS stream,
- Figure 9: is illustrative of a hash table descriptor syntax.

### Detailed description of preferred embodiment

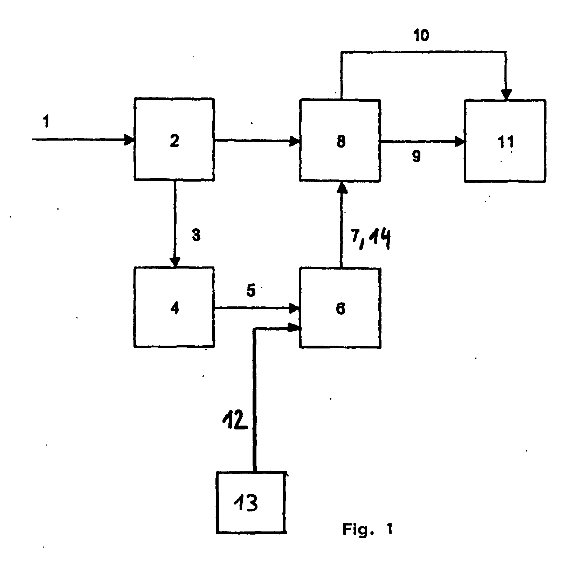

Figure 1 shows a block diagram of a digital video recorder. The digital video recorder has demultiplexer 2 for receiving a transport stream, such as a MPEG-2 transport stream 1.

The demultiplexer 2 is coupled to DVR encoder 8. Further the de-multiplexer 2 is coupled to analyser 4. The demultiplexer 2 serves to de-multiplex the transport stream 1 in order to provide the required program data to the DVR encoder 8 and to provide DVB-SI data 3 which is embedded in the transport stream 1 to the analyser 4.

The analyser 4 serves to decode the DVB-SI data 3 in order to provide metadata 5 to navigation data and packet embedder 6.

Other metadata 12 may also be provided to the navigation data and packet embedder 6 from data source 13. Data source 13 can be an entry device for user provided metadata such as annotations. Alternatively data source 13 may provide for an interface to teletext metadata and / or metadata received via digital audio broadcast (DAB) or the Internet.

The navigation data and packet embedder 6 provides for metadata in the form of vendor specific data 7 and for metadata transport packets 14 to be ingested into the recorded stream.

The vendor specific data 7 and the data transport packets 14 are inputted into the DVR encoder 8. Based on the program data which the DVR encoder receives from the demultiplexer 2 and based on the vendor specific data 7 and the data transport packets 14 the DVR encoder generates a data stream 9 and navigation data 10.

The data stream 9 comprises the additional data transport packets 14 provided by the navigation data and packet embedder 6 whereas the navigation data 10 comprises the vendor specific data 7 from the navigation data and packet embedder 6. The data stream 9 and the navigation data 10 are recorded on DVR disc 11.

In operation a transport stream 1 is received by means of a satellite or cable transmission or via another communication channel. The transport stream 1 comprises a number of video and / or audio programs as well as associated DVB-SI data 3.

The user selects one or more of the programs contained in the transport stream 1 for recording. The corresponding program data packets are provided from the demultiplexer 2 to the DVR encoder 8.

The DVB-SI data 3 which is associated with the user selected programs is also demultiplexed and provided to the analyser 4 for decoding. The analyser 4 outputs the decoded metadata 5.

The navigation data and packet embedder 6 transforms this metadata into vendor specific data 7 and into data transport packets 14 and provides these two formats of transformed metadata to the DVR encoder 8.

This way the DVR encoder 8 integrates the vendor specific data 7 into the navigation data 10 and it ingests the additional metadata transport packets 14 into the data stream 9 for recording. As a result the recording on the DVR disc 11 contains the metadata both in the form of additional data transport packets 14 as well as in the form of navigation data 10.

The navigation data 10 is primarily used for navigation purposes, such as retrieval of a specific user desired program. As metadata is included in the navigation data 10 the user is enabled to define a search profile which encompasses information stored in the metadata. This has the further advantage that the navigation data 10 can be accessed quickly such that a search is performed very rapidly.

In case the metadata comprised in the navigation data 10 is erased for some reason it can be reconstructed by means of the additional data transport packets 14 which have been ingested into the data stream 9.

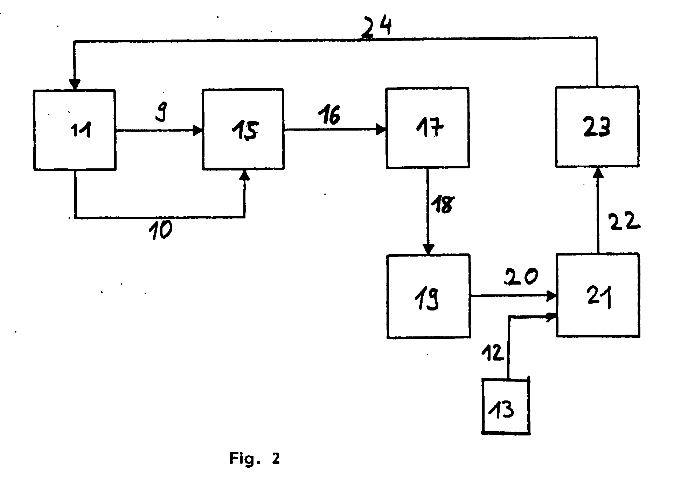

Figure 2 shows a block diagram of another embodiment of a digital video recorder in accordance with the invention. Elements of figure 2 which correspond to elements of the embodiment of figure 1 are designated by the same reference numerals.

The DVR of figure 2 has a DVR decoder 15 which receives a data stream 9 from DVR disc 11 as well as navigation data 10. The DVR disc 11 contains metadata as described above with reference to figure 1.

The DVR decoder 15 outputs a MPEG-2 transport stream 16 which is inputted into demultiplexer 17. The demultiplexer 17 demultiplexes DVB-SI data 18 which is contained in the transport stream 16. The DVB-SI data 18 is inputted into analyser 19.

The analyser 19 decodes the DVB-SI data 18 and provides corresponding metadata 20 to navigation data embedder 21. In addition alternatively metadata 12 can be provided from data source 13 as it is the case in the embodiment of figure 1.

The navigation data embedder 21 transforms the metadata 12 and metadata 20 into vendor specific data 22. The vendor specific data 22 is provided to the DVR encoder 23 which generates modified navigation data 24 comprising the metadata 12 and 20 in the form vendor specific data 22. The modified navigation data 24 is written onto the DVR disc 11.

This way a user is enabled to add navigation data in the form of metadata to a previous recording. This feature is especially advantageous for recordings which have been made previously on a prior art DVR. In such recordings the DVB-SI data 18 may have been recorded as part of the transport stream. However such recorded DVB-SI data is not accessible by a user of a prior art DVR and cannot be used for navigation purposes. By means of the embodiment of figure 2 a user is enabled to transform such DVB-SI data into usable navigation data and to add additional metadata

This way data packets are embedded into the DVR vendor specific data field and into the DVR MPEG-2 transport stream (MPEG TS). Both types of embedded packets can be used separately or in combination. For example vendor specific data packets can be used to locate the additional metadata packets in the MPEG TS transport stream and the packets in the MPEG-2 transport stream can be used to generate the vendor specific data metadata packets.

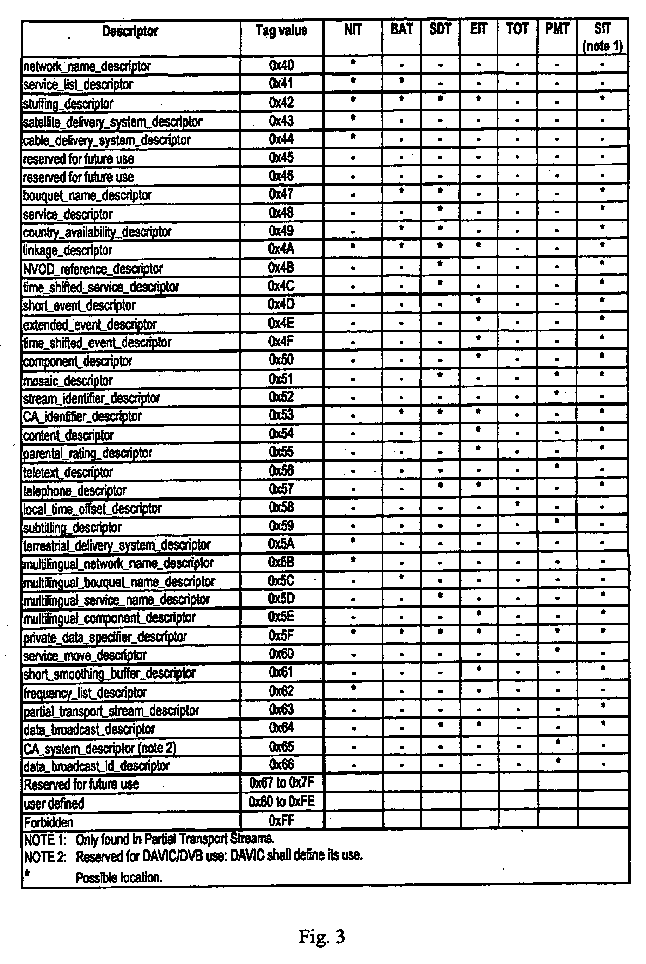

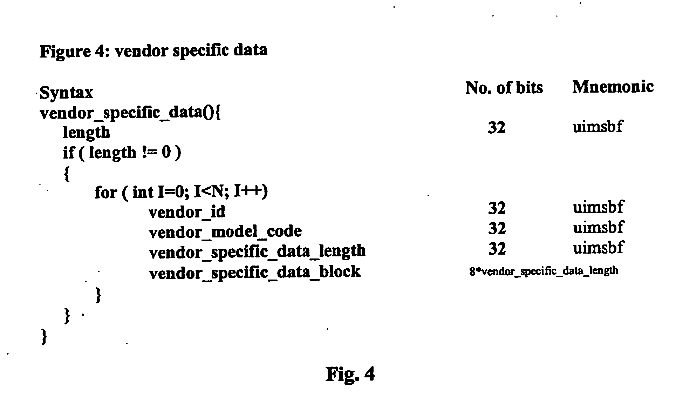

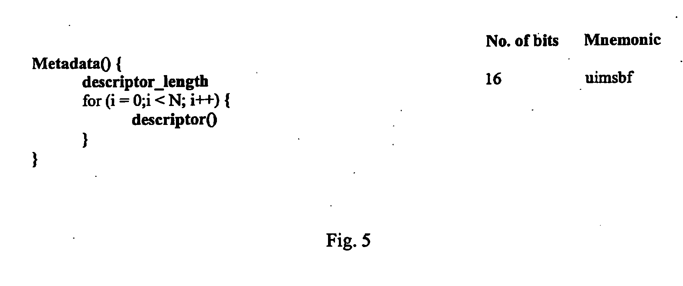

Figure 3 shows a table listing valid descriptors for DVB-SI metadata packets. In accordance with the invention metadata is transformed into the vendor specific data format of figure 4., which is a container format for these metadata.
In accordance with the preferred embodiment of figure 5 this is done by transforming the metadata from the data structure of figure 5 to the data structure of figure 4. In the data structure of figure 5 descriptor_length designates the total length of the metadata descriptors which is followed by a list of the descriptors (cf. figure 3)

Vendor specific data are defined for the volume (info file), each playlist and for the files storing the attributes of A/V stream file.

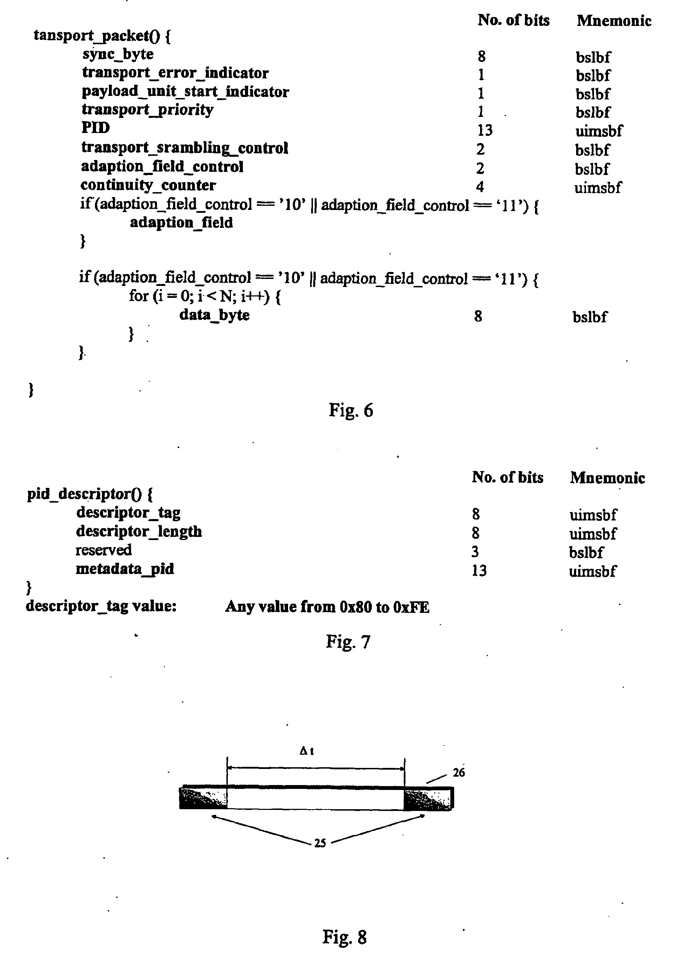

A form of metadata packets which is in compliance with the syntax and semantic of a transport packet is illustrated in figure 6 and is defined in ISO / IEC 13818-1 MPEG-2 Systems - Generic Coding of Moving Pictures and Associated Audio Information.

The packet identifier (PID) of figure 5 can have any value in the range of 0x00010 - 0x1FFE. The PID values chosen for the metadata packets needs to be adapted depending on the PID's already used for audio, video etc. in the MPEG-2 transport stream. Another idea of this invention is to specify the PID of metadata packets by means of a pid_descriptor, which is sorted (see figure 7) in the vendor specific data field.

Examples for metadata are DVB-SI information, which has been almost disregarded by the DVR specification (like program genre). Also information retrieved from other sources such as teletext, DAB and internet content carry metadata, which can be embedded within the MPEG TS.

If at the beginning of the recording no payload is existent - this is a further embodiment - placeholder packets are written to the MPEG TS stream. Later theses placeholders can be replaced with valid metadata.

Another use of the technique is to store metadata packets in isochronous intervals in the MPEG TS stream (figure 8). If no payload is available placeholder packets shall be stored. These metadata packets contain hash tables calculated during the recording. A hash table is a check sum or CRC and provides consistency checks after recording. The check is done by recalculation the hash table metadata during playback and comparing it to those located in the stream.

For this purpose additional metadata packets 25 are ingested into the transport stream 26 at time intervals Δt.

By the usage of the hash table metadata packet it is possible to retrieve and also to generate a consistent take even when a power drop occurred during the record in the DVR. A power drop will generate inconsistent DVR files.

Also by the usage of the hash table metadata packet it is possible to detect edit operations having been done by a prior art DVR recorder. For those edited streams a metadata update may be necessary.

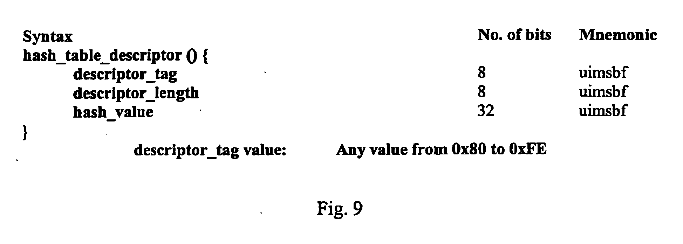

By calculating a hash table value for all meaningful DVR files (like the playlist file) edit operations can easily be detected. Even edit operations that have been done with other DVRs can be identified. Figure 9 shows the appropriate hash_table_descriptor, which is stored in vendor specific data.

It is a further advantage of the invention to provide metadata packets for trick modes. Metadata packets embedded within the bit stream (MPEG TS) are carrying pointers to adjacent entry points for I-frames. The trick mode metadata packets can encompass a list of N I-frames in the past and / or in the future, which will simplify the handling of trick mode.

It is to be noted that the present invention enables the additional storage of metadata content in parallel to the broadcast information which makes all the metadata accessible independent from their definition in the DVR standard. Further the invention provides for editing capabilities for user-defined collections, annotations and short cuts.

By embedding hash tables in the MPEG TS stream the error handling and recovery capabilities of a digital video recorder are improved. Further the invention enables to store adjacent I-picture positions which permits easier trick mode handling.

**list of reference numerals**

| | |
|---|---|
| transport stream | 1 |
| demultiplexer | 2 |
| DVB-SI data | 3 |
| analyser | 4 |
| metadata | 5 |
| navigation data and packet embedder | 6 |
| vendor specific data | 7 |
| DVR encoder | 8 |
| data stream | 9 |
| navigation data | 10 |
| DVR disc | 11 |
| metadata | 12 |
| data source | 13 |
| data transport packet | 14 |
| DVR decoder | 15 |
| transport stream | 16 |
| demultiplexer | 17 |
| DVB-SI data | 18 |
| analyser | 19 |
| metadata | 20 |
| navigation data embeddor | 21 |
| vendor specific data | 22 |
| DVR encoder | 23 |
| navigation data | 24 |
| metadata packets | 25 |
| transport stream | 26 |

## Claims

1. A method for adding metadata to a transport stream (1), the transport stream having multiple audio/video programs and embedded metadata (3) relating to the audio/video programs, the method comprising the steps of:
- receiving a said transport stream (1);
- de-multiplexing (2) said transport stream to obtain program data and embedded metadata (3) relating to the program data;
- decoding (4) the de-multiplexed metadata to obtain decoded metadata (5);
- transforming (6) the decoded metadata into a container format (7);
- integrating (8) the transformed metadata into navigation data (10) for recording;
- recording said navigation data (10) on a storage medium (11); and
- recording, on said storage medium (11), a transport stream (9,14) comprising said program data and embedded metadata obtained by said de-multiplexing.

2. A method for adding metadata to a transport stream stored on a storage medium (11), the transport stream having multiple audio/video programs and embedded metadata relating to the audio/video programs, the method comprising the steps of
- receiving a said transport stream (16) from said storage medium on which it is stored;
- de-multiplexing (17) said transport stream to obtain program data and embedded metadata (18) relating to the program data;
- decoding (19) the de-multiplexed metadata to obtain decoded metadata (20);
- transforming (21) the decoded metadata into a container format (22);
- integrating (23) the transformed metadata (22) into navigation data (24) for recording;
- recording said navigation data (24) on said storage medium (11), whereby said navigation data (24) are added to the data stored on said storage medium.

3. The method of claim 1, further comprising the step of providing additional metadata (12) other than said embedded metadata, wherein the additional metadata are also transformed into said container format (7).

4. The method of claim 3, wherein the additional metadata are provided as user defined metadata and/or teletext data and/or digital audio broadcast data and/or Internet data.

5. The method of one of the claims 1, 3 and 4, wherein hash tables are calculated during the recording, the calculated hash tables are packed in data packets (25), and the data packets (25) that contain the hash tables are ingested into said transport stream in isochronous intervals (Δt).

6. The method of one of the claims 1, 3, 4 and 5 wherein packets metadata for a trick mode are provided which are embedded within said transport stream.

7. A digital audio and/or video recorder for adding metadata to a transport stream, the transport stream having multiple audio and/or video programs and embedded metadata relating to the audio and/or video programs, the recorder comprising:
- means for de-multiplexing (2) a received transport stream (1) to obtain program data and embedded metadata (3) relating to the program data;
- means for decoding (4) the de-multiplexed metadata to obtain decoded metadata (5);
- means for transforming (6) the decoded metadata into a container format (7);
- means for integrating (8) the transformed metadata into navigation data (10) for recording;
- means for recording said navigation data (10) on a storage medium (11); and
- means for recording, on said storage medium (11), a transport stream (9,14) comprising said program data and embedded metadata obtained by said de-multiplexing.

8. A digital audio and/or video recorder for adding metadata to a transport stream stored on a storage medium (11), the transport stream having multiple audio and/or video programs and embedded metadata relating to the audio and/or video programs, the recorder comprising:
- means for receiving a said transport stream (16) from said storage medium on which it is stored;
- means for de-multiplexing (17) said transport stream to obtain program data and embedded metadata (18) relating to the program data;
- means for decoding (19) the de-multiplexed metadata to obtain decoded metadata (20);
- means for transforming (21) the decoded metadata into a container format (22);
- means for integrating (23) the transformed metadata (22) into navigation data (24) for recording; and
- means for recording said navigation data (24) on said storage medium (11), whereby said navigation data (24) are added to the data stored on said storage medium.

9. Digital audio and/or vided recorder according to claim 7, further comprising
- means for providing additional metadata (12) other than said embedded metadata, wherein the additional metadata are also transformed into said container format (22).

10. Digital audio and/or video recorder according to one of the claims 7 and 9, comprising means for providing metadata packets for a trick mode and for embedding said metadata packets within said transport stream.

## Patentansprüche

1. Verfahren zum Hinzufügen von Metadaten zu einem Transportstrom (1), der mehrere Audio/Videoprogramme und eingebettete Metadaten (3) aufweist, die sich auf die Audio/Videoprogramme beziehen, wobei das Verfahren die Schritte umfasst:
- Empfangen des Transportstroms (1);
- Demultiplexen (2) des Transportstroms, um Programmdaten und sich auf die Programmdaten beziehende eingebettete Metadaten (3) 2u erhalten;
- Dekodieren (4) der demultiplexten Metadaten, um dekodierte Metadaten (5) zu erhalten;
- Transformieren (6) der dekodierten Metadaten in ein Containerformat (7);
- Integrieren (8) der transformierten Metadaten in Navigationsdaten (10) zur Aufzeichnung;
- Aufzeichnen der Navigationsdaten (10) auf ein Speichermedium (11); und
- Aufzeichnen eines Transportstrom (9,14), der die durch das Demultiplexen erhaltenen Programmdaten und eingebetteten Metadaten umfasst, auf das Speichermedium (11).

2. Verfahren zum Hinzufügen von Metadaten zu einem auf einem Speichermedium (11) gespeicherten Transportstrom, der mehrere Audio/Videoprogramme und eingebettete Metadaten aufweist, die sich auf die Audio/Videoprogramme beziehen, wobei das Verfahren die Schritte umfasst:
- Empfangen des Transportstroms (16) von dem Speichermedium, auf dem er gespeichert ist;
- Demultiplexen (17) des Transportstroms, um Programmdaten und eingebettete, sich auf die Programmdaten beziehende Metadaten (18) zu erhalten;
- Dekodieren (19) der demultiplexten Metadaten, um dekodierte Metadaten (20) zu erhalten;
- Transformieren (21) der dekodierten Metadaten in ein Containerformat (22);
- Integrieren (23) der transformierten Metadaten (22) in Navigationsdaten (24) zur Aufzeichnung;
- Aufzeichnen der Navigationsdaten (24) auf das Speichermedium (11), wodurch die Navigationsdaten (24) den auf dem Speichermedium gespeicherten Daten hinzugefügt werden.

3. Verfahren nach Anspruch 1, das ferner den Schritt umfasst, zusätzliche Metadaten (12) außer den eingebetteten Metadaten vorzusehen, wobei die zusätzlichen Metadaten auch in das Containerformat (7) transformiert werden.

4. Verfahren nach Anspruch 3, bei dem die zusätzlichen Metadaten als vom Benutzer definierte Metadaten und/oder Teletextdaten und/oder digitale Audio-Rundfunkdaten und/oder Internetdaten vorgesehen werden.

5. Verfahren nach einem der Ansprüche 1,3 und 4, bei dem während der Aufzeichnung Hash-Tabellen berechnet werden, die in Datenpakete (25) paketisiert werden und die Datenpakete (25), die die Hash-Tabellen enthalten, in isochronen Intervallen (Δt) in den Transportstrom aufgenommen werden.

6. Verfahren nach einem der Ansprüche 1,3,4 und 5, bei dem Matadatenpakete für einen Trickbetrieb vorgesehen werden, die in den Transportstrom eingebettet werden.

7. Digitaler Audio- und/oder Videorecorder zum Hinzufügen von Metadaten zu einem Transportstrom, der mehrere Audio - und/oder Videoprogramme und sich auf die Audio- und/oder Videoprogramme beziehende eingebettete Metadaten aufweist, wobei der Recorder umfasst:
- Mittel zum Demultiplexen (2) eines empfangenen Transpcrtstroms (1), um Programmdaten und sich auf die Programmdaten beziehende eingebettete Metadaten (3) zu erhalten;
- Mittel zum Dekodieren (4) der demultiplexten Metadaten, um dekodierte Metadaten (5) zu erhalten;
- Mittel zum Transformieren (6) der dekodierten Metadaten in ein Containerformat (7);
- Mittel zum Integrieren (8) der transformierten Metadaten in Navigationsdaten (10) zur Aufzeichnung;
- Mittel zum Aufzeichnen der Navigationsdaten (10) auf ein Speichermedium (11); und
- Mittel zum Aufzeichnen eines Transportstroms (9,14) auf das Speichermedium (11), der die durch das Demultiplexen erhaltenen Programmdaten und eingebetteten Metadaten umfasst.

8. Digitaler Audio- und/oder Videorecorder zum Hinzufügen von Metadaten zu einem auf einem Speichermedium (11) gespeicherten Transportstrom, der mehrere Audio- und/oder Videoprogramme und sich auf die Audio- und/oder Videoprogramme beziehende eingebettete Metadaten aufweist, wobei der Recorder umfasst:
- Mittel zum Empfangen des Transportstroms (16) aus dem Speichermedium, auf dem er gespeichert ist;
- Mittel zum Demultiplexen (17) des Transportstroms, um Programmdaten und sich auf die Programmdaten beziehende eingebettete Metadaten (18) zu erhalten;
- Mittel zum Dekodieren (19) der demultiplexten Metadaten, um dekodierte Metadaten (20) zu erhalten;
- Mittel zum Transformieren (21) der dekodierten Metadaten in ein Containerformat (22);
- Mittel zum Integrieren (23) der transformierten Metadaten (22) in Navigationsdaten (24) zur Aufzeichnung; und
- Mittel zum Aufzeichnen der Navigationsdaten (24) auf das Speichermedium (11), wodurch die Navigationsdaten (24) den auf dem Speichermedium gespeicherten Daten hinzugefügt werden.

9. Digitaler Audio- und/oder Videorecorder nach Anspruch 7, der ferner umfasst:
- Mittel zum Vorsehen zusätzlicher Metadaten (12) außer den eingebetteten Metadaten, wobei die zusätzlichen Metadaten auch in das Containerformat (22) transformiert werden.

10. Digitaler Audio- und/oder Videorecorder nach einem der Ansprüche 7 und 9, umfassend Mittel zum Vorsehen von Metadatenpaketen für einen Trickbetrieb und zum Einbetten dieser Metadatenpakete in den Transportstrom.

## Revendications

1. Un procédé pour l'ajout de métadonnées à un flux de transport (1), le flux de transport disposant de multiples programmes audio/vidéo et de métadonnées intégrées (3) concernant les programmes audio/vidéo, le procédé comprenant les étapes de :
- réception dudit flux de transport (1);
- démultiplexage (2) dudit flux de transport afin d'obtenir des données de programme et des métadonnées intégrées (3) en rapport avec les données du programme ;
- décodage (4) des métadonnées démultiplexées afin d'obtenir des métadonnées décodées (5) ;
- transformation (6) des métadonnées décodées en un format conteneur (7);
- intégration (8) des métadonnées transformées en données de navigation (10) pour enregistrement;
- enregistrement desdites données de navigation (10) sur un support de stockage (11) ; et
- enregistrement, sur ledit support de stockage (11), d'un flux de transport (9, 14) comprenant lesdites données de programme et lesdites métadonnées intégrées obtenues par ledit démultiplexage.

2. Un procédé pour l'ajout de métadonrées à un flux de transport stocké sur un support de stockage (11), le flux de transport disposant de multiples programmes audio/vidéo et de métadonnées intégrées concernant les programmes audio/vidéo, le procédé comprenant les étapes de:
- réception dudit flux de transport (16) en provenance dudit support de stockage sur lequel il est stocké;
- démultiplexage (17) dudit flux de transport afin d'obtenir des données de programme et des métadonnées intégrées (18) en rapport avec les données du programme;
- décodage (19) des métadonnées démultiplexées afin d'obtenir des métadonnées décodées (20);
- transformation (21) des métadonnées décodées en un format conteneur (22);
- intégration (23) des métadonnées transformées (22) en données de navigation (24) pour enregistrement;
- enregistrement desdites données de navigation (24) sur ledit support de stockage (11), par lequel lesdites données de navigation (24) sont ajoutées aux données stockées sur ledit support de stockage.

3. Le procédé de la revendication 1, comprenant en outre l'étape de fourniture de métadonnées supplémentaires (12) autre que lesdites métadonnées intégrées, dans lequel les métadonnées supplémentaires sont aussi transformées audit format conteneur (7).

4. Le procédé de la revendication 3, dans lequel les métadonnées supplémentaires sont fournies en tant que métadonnées définies par l'utilisateur et/ou données télétexte et/ou données de diffusion audio numériques et/ou données Internet.

5. Le procédé selon l'une des revendications 1, 3 ou 4, dans lequel les tables de hachage (hash tables) sont calculées pendant l'enregistrement; les tables de hachage calculées sont rangées dans des paquets de données (25), et les paquets de données (25) qui contiennent les tables de hachage sont ingérés dans le flux de transport à intervalles isochrones (Δt).

6. Le procédé d'une des revendications 1, 3, 4 ou 5, dans lequel les paquets de métadonnées pour un mode non standard sont fournis intégrés dans ledit flux de transport.

7. Un enregistreur audio et/ou vidéo numérique pour l'ajout de métadonnées à un flux de transport, le flux de transport disposant de multiples programmes audio et/ou vidéo et de métadonnées intégrées en rapport avec les programmes audio/vidéo, l'enregistreur comprenant;
- un moyen de démultiplexage (2) d'un flux de transport reçu (1) afin d'obtenir des données de programme et des métadonnées intégrées (3) en rapport avec les données du programme ;
- un moyen de décodage (4) des métadonnées démultiplexées afin d'obtenir des métadonnées décodées (5);
- un moyen de transformation (6) des métadonnées décodées en un format conteneur (7) ;
- un moyen d'intégration (8) des métadonnées transformées en données de navigation (10) pour enregistrement ;
- un moyen d'enregistrement desdites données de navigation (10) sur un support de stockage (11); et
- un moyen d'enregistrement, sur ledit support de stockage (11), d'un flux de transport (9, 14) comprenant lesdites données de programme et lesdites métadonnées intégrées obtenues par ledit démultiplexage.

8. Un enregistreur audio et/ou vidéo numérique pour l'ajout de métadonnées à un flux de transport stocké sur un moyen de stockage (11), le flux de transport disposant de multiples programmes audio et/ou vidéo et de métadonnées intégrées en rapport avec les programmes audio/vidéo, l'enregistreur comprenant:
- un moyen de réception dudit flux de transport (16) en provenance dudit support de stockage sur lequel il est stocké;
- un moyen de démultiplexage (17) dudit flux de transport afin d'obtenir des données de programme et des métadonnées intégrées (18) en rapport avec les données du programme ;
- un moyen de décodage (19) des métadonnées démultiplexées afin d'obtenir des métadonnées décodées (20) ;
- un moyen de transformation (21) des métadonnées décodées en un format conteneur (22) ;
- un moyen d'intégration (23) des métadonnées transformées (22) en données de navigation (24) pour enregistrement ; et
- un moyen d'enregistrement desdites données de navigation (24) sur ledit support de stockage (11), par lequel lesdites données de navigation (24) sont ajoutées aux données stockées sur ledit support de stockage.

9. Enregistreur numérique audio et/ou vidéo selon la revendication 7, comprenant en outre:
- un moyen de fourniture de métadonnées supplémentaires (12) autres que lesdites métadonnées intégrées, dans lequel les métadonnées supplémentaires sont aussi transformées en ledit format conteneur (22).

10. Enregistreur numérique audio et/ou vidéo selon une des revendications 7 ou 9, comprenant un moyen de fournir des paquets de métadonnées pour un mode non standard et pour intégrer lesdits paquets de métadonnées à l'intérieur dudit flux de transport.
